# EUROPEAN PATENT APPLICATION

(11) **EP 2 461 121 A1**
(43) Date of publication of application: **06.06.2012**
(21) Application number: 10803945.4
(22) Date of filing: 26.07.2010
(51) Int. Cl.: F24J 2/54, F24J 2/10

(54) **SOLAR TRACKER FOR ROTARY HIGH-CONCENTRATION PHOTOVOLTAIC SOLAR MODULES FOR ROOFS AND SOLAR FARMS**

(30) Priority: 28.07.2009 ES 200930528
(71) Applicant: Abengoa Solar New Technologies, S.A., 41018 Sevilla (ES)
(72) Inventor: ENRILE MEDINA, Juan, E-41018 Sevilla (ES); VIANI DESPLATS-REDIER, Iñigo Julián, E-41018 Sevilla (ES); RODRÍGUEZ FERNÁNDEZ, David, E-41018 Sevilla (ES); CELYA PRIETO, Fernando, E-41018 Sevilla (ES)
(74) Representative: Pons Ariño, Angel
(86) International application number: PCT/ES2010/070514
(87) International publication number: WO 2011/012755

(57) **Abstract**

The tracker comprises a frame with an upper structure (4) which supports photovoltaic modules (12), and a solar tracker mechanism for rotating the frame about an azimuth axis and a horizontal axis. The frame comprises a base (3) of assembled sections which is rigidly secured to the ground. The upper structure (4) comprises lateral Z sections (5), one on each side; an upper central section (7) and a lower central section (8) connected by connecting rods (15) and positioned longitudinally half-way between said lateral sections (5), and cross beams (9) at the bottom of the lateral sections (5) and central section (6). A drive means (11) at the centre of the central sections (7, 8) moves the central sections (7, 8) relative to one another, thereby rotating the modules (12) horizontally.

## Description

### OBJECT OF THE INVENTION

This invention may be included in the technical field of electric energy production through the use of photovoltaic solar cells.

The object of the invention consists of a tracker for rotating high-concentration solar modules for decks and solar fields, which is provided with a two axes-solar tracking mechanism and which shows advantageous mechanical features and great versatility.

### BACKGROUND OF THE INVENTION

As it is known, in recent times, renewable energies have boomed and have experienced an important development. With regard to solar energy, based on the exploitation of solar radiation, photovoltaic solar energy, which uses photovoltaic panels and the so-called "solar trackers" that guide those photovoltaic panels, stands out among the different applications.

The photovoltaic elements for the conversion of radiation energy into electric energy have a relatively limited performance. The highest energy performance of solar trackers is achieved when the sun impacts perpendicularly on the surface. As the direction of the sun rays varies throughout the day, the degree of impact and the energy collected will likewise vary. Generally, the panel will be assembled with an inclination depending on the latitude of the place of assembly, in order to take full advantage of the solar radiation; the panels are normally mounted on a structure or receptor frame to achieve a certain inclination.

To maximize energy performance, it is necessary to align the surfaces as perpendicularly as possible with respect to the direction of the solar radiation. In order to adapt the voltaic elements to the variable state of the sun, there are rotating stands, the so-called trackers, which enable to guide the collector's surfaces to the desired position. This is also applied to concentrating photovoltaic modules.

There are several different proposals regarding solar trackers, also known as solar guiding devices which, in order to maximize the use of solar energy, feature control systems and mechanisms that enable the guidance of a series of solar panels throughout the day, so that the sun impacts them in a substantially perpendicular manner.

Different models of solar trackers are known in the market, among them we could mention those that feature a pole or support structure for the photovoltaic plates and a motor for the operation of the photovoltaic plates associated to this support. Actually, there are different types of solar trackers for photovoltaic plate installations in the market, whose goal is to change the inclination of the photovoltaic plates throughout the day, in order to keep them facing the sun and, consequently, obtain a higher collection and exploitation of the solar energy.

Currently, some solutions consisting in the adoption of a structure which allows the variation of the degree of inclination as needed, which consequently vary the inclination angle, are known. Likewise, it is important to mention that there are many companies that market solar trackers and there are many models with tracking on both one and two axes, all of them featuring a series of common negative characteristics which are mentioned below:
- dubious operating reliability when installation must stand the weight of large solar collector areas, as a consequence of the quantity of mechanical elements that are present,
- difficulties in the assembly, disassembly and maintenance, due to limited working space available, since solar trackers are installed in solar fields where, in order to obtain optimal performance, a large number of solar trackers are grouped in reduced spaces,
- solar trackers are not designed to withstand the weight of large areas of solar collectors on decks or roofs, and they are unable to easily stand the adverse atmospheric situations present in those areas, and they require increased maintenance operations,
- deficient cooling due to the increased temperature caused by the grouping of panels in the least possible space through the creation of large areas at a single level, which results in a decrease in performance,
- stress generation due to expansion caused by the change in temperature between day and night time, since the support structures are rigid,
- stability problems, since the surfaces are essentially flat, the points of attachment and rotation are located outside of the plane crossing its center of gravity, causing static, asymmetrical charges which limit their weight and dimensions in order to avoid overloading the rotation points, a situation that is aggravated by the winds, which generate forces and tipping moments reducing the structures' stability.

Due to the aforementioned inconveniences, the already known photovoltaic concentration devices show a very difficult installation on buildings' roofs or other secondary exploitation surfaces, with their use being limited to production centralized on ground that is engaged in this activity.

The Spanish patent application ES2267382 (SOL3G, S.L.) describes a double-rotation structure featuring modules that comprise several photovoltaic cells. The structure may rotate with respect to an azimuthal axis and may make the modules rotate with respect to an axis depending on the modules' longitudinal direction. The structure is composed of lateral plates, and a support platform over which the modules stand, formed by hexagonal bases. The document further describes solar modules formed by an U-shaped body made of sheets in which several photovoltaic solar cells are fitted.

In the already known trackers, the rotation of the modules with respect to the axis, depending on the longitudinal direction of the modules, is carried out through an actuator, which acts on a point close to one of the tracker structure's edge. The aforementioned actuator's placement causes increased stress and tensions which forces the oversizing of the tracker's elements.

The technical problem that arises consists of defining a solar tracker that rotates along two axes for high-concentration photovoltaic solar modules that provides rotation depending on a horizontal direction without the creation of an unjustifiably elevated burden on the tracker's elements.

### DESCRIPTION OF THE INVENTION

This invention solves the aforementioned disadvantages through a solar tracker for rotating high-concentration solar modules which features the following advantages with respect to solar trackers for the same purpose included in the state of the art.
- the use of a reduced number of mechanical elements,
- the capacity to withstand the weight of large areas of solar collectors on decks or roofs,
- the capacity to resist adverse climatologic conditions,
- simplified transportation, assembly, disassembly and maintenance,
- higher performance,
- enables panel expansion,
- stability, with no static charges, resistant to the wind, robust, flexible, durable,
- balanced load distribution on the structure, with avoids unnecessary or unnecessarily high bending and torsion stress, which results in a decreased size of the tracker's elements.

The tracker of the invention is composed of a tracking frame, which in turn comprises a base and an upper structure, composed also of a control system. The frame enables an active tracking of the solar track, while the control system gives the invention an autonomous management.

The base is integrated to the ground or deck in which it is installed, so it does not require anchoring. The base features an actuation system which allows rotation of the upper structure around its azimuthal axis with respect to the base, wherein movement may be carried out through a toothed belt, a belt or a chain.

The upper structure acts as a stand for the concentration modules, with a variable quantity of supported modules, in order to optimize costs, depending on the modules' own geometry and weight, and the transportation legislation, as well as the electric regulation of the implementation area.

The concentration modules, fixed to the upper structure, execute a rotation with respect to the ground horizontal, so that, together with the azimuthal movement, those modules execute an active tracking of the solar trajectory with the necessary precision required by a system of photovoltaic concentration.

The upper structure has been optimized for industrialized manufacturing with mechanically and environmentally resistant materials, such as aluminum, heat-galvanized, zinc-plated or stainless steel.

The upper structure comprises Z-shaped lateral profiles placed longitudinally, which provide the necessary rigidity in order to guarantee a good performance of the system when confronted with wind action or internal working tensions. This Z-shaped design shows the added benefit, with respect to U-shaped profiles, that it avoids water accumulation, substantially improving its performance against corrosion.

Located between the side profiles, the upper structure comprises an upper central profile and a lower central profile linked by an actuator and by rods.

The actuator executes a movement which causes the rotation and movement of the upper profile with respect to the lower profile, a movement that is defined and limited by the rods' position and length. This movement involves rotation of the modules, since those modules are in an articulated manner on their lower end to the lower profile, and on their upper end to the upper profile. This way, the tracking is created depending on the rotation movement of the modules with respect to the horizontal.

The upper structure's rotation is carried out through the linear, electric or hydraulic actuator, placed in a central position of the upper structure. This way, the stress on the upper structure is reduced. This aspect is especially advantageous, since the invention is preferably placed on high areas, such as rooftops, building decks or parking canopies, where there is no easy access.

The components' manufacturing is carried out in the metallic structure production workshop, so that the extensive assembly work may be executed on the tracker. Therefore, it is not necessary to execute the time-intensive work stages on the open field during final assembly. Through selective construction, a field assembly is made essentially easier. The support for the solar awning is made of aluminum sheets or light galvanized metal.

### DESCRIPTION OF THE DRAWINGS

In order to complement the description that is being carried out and to help to a better understanding of the invention's characteristics according to a preferred embodiment, a set of drawings is attached as an integrating part of the description where with an illustrative, non-limiting character, the following has been represented:
Figure 1.- Shows a lower perspective view of the tracker of the invention.
Figure 2 - Shows a close-up view of the central profiles.
Figure 3.- Shows a schematic side view of the actuator's operation.

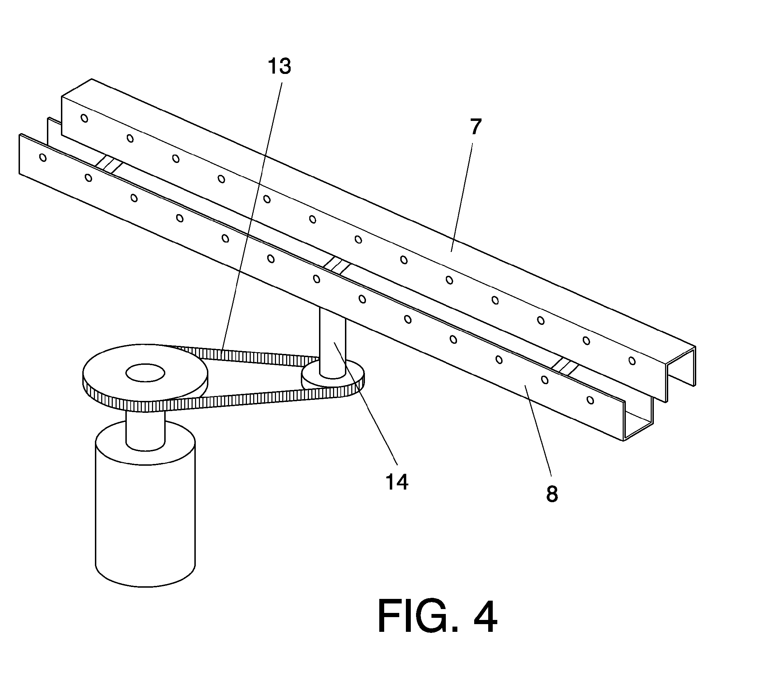

Figure 4 - Shows a view of the operation through a toothed belt.

### PREFERED EMBODIMENT OF THE INVENTION

The solar tracker for solar modules (12) of the invention comprises a frame and a control system.

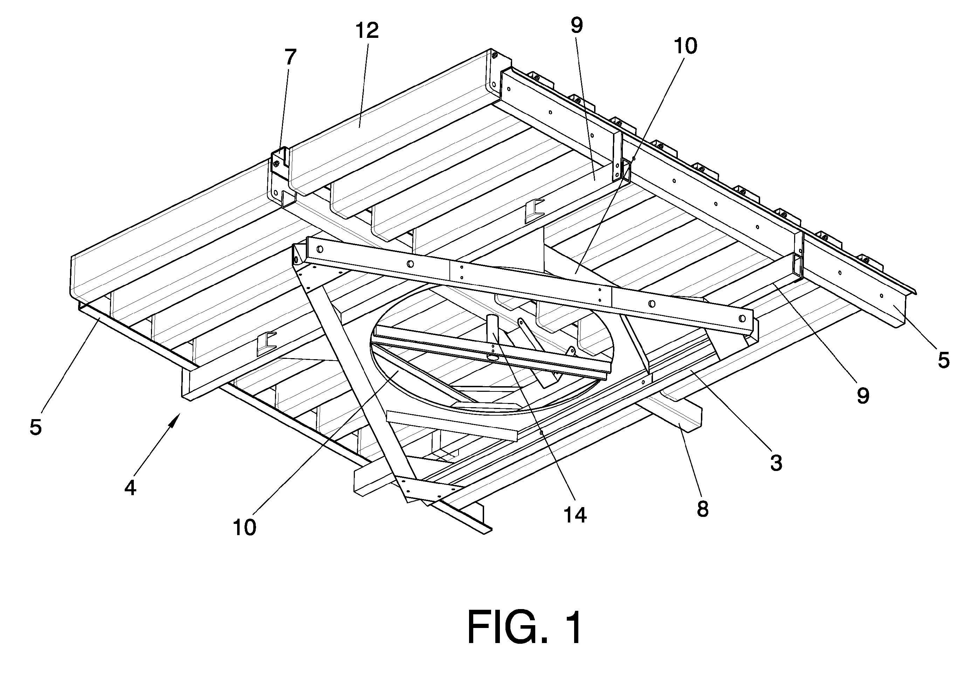

As it may be observed on Figure 1, the frame is formed by a base (3) and an upper structure (4) in which the modules (12) are mounted. In turn, the upper structure (4) includes two lateral profiles (5) arranged in a Z-shape, placed in a longitudinal direction, one on each side. The upper structure (4) additionally comprises an upper central profile (7) and a lower central profile (8) facing each other and placed longitudinally parallel to the lateral profiles (5), and located among said lateral profiles (5).

The movement between the upper central profile (7) and the lower central profile (8) is produced by the operation of an actuator (11) over the upper central profile (7). The movement causes a rotation of the modules (12), due to the actuator (11) carrying out a movement that causes the rotation and the movement of the upper central profile (7) with respect to the lower central profile (8), a rotation that is defined and limited by the rods' (15) length and position. This movement involves the rotation of the modules (12), as it has been mentioned above, since those modules (12) are attached in an articulated way on their lower part to the lower central profile (8) and on their upper part to the upper central profile (7). Thererfore, the tracking is created by a rotation movement from the modules (12) with respect to the horizontal.

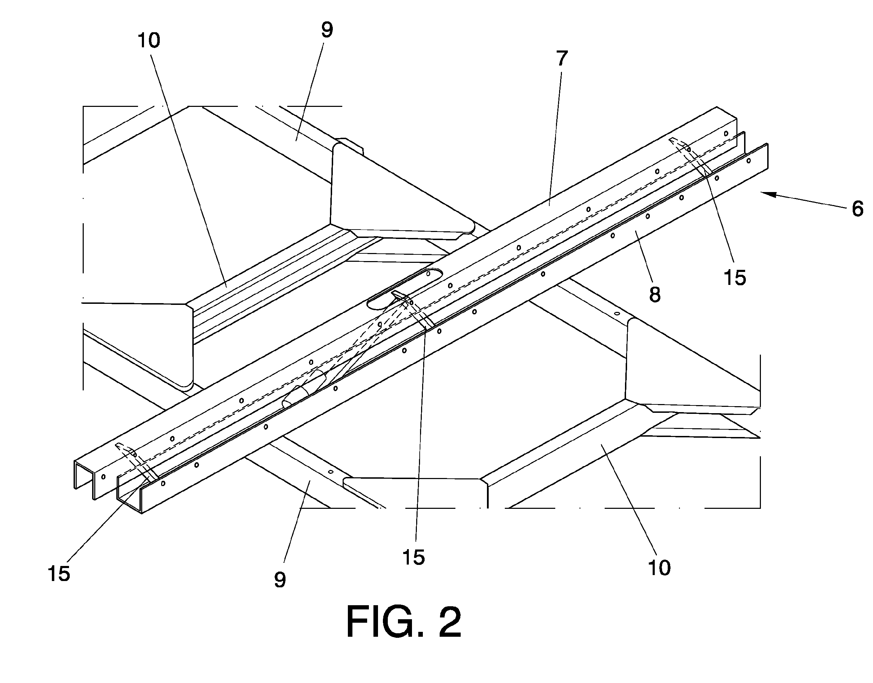

The upper structure (4) comprises crossbeams (9) (see Figure 2) for rigidity, located on the lower part of the lateral profiles (5) and the central profiles (7, 8) and connected to those lateral profiles (5) and central profiles (7, 8) according to a transversal direction. The crossbeams may in turn be interconnected by bars (10).

As previously indicated, the frame comprises a lower base (3), said base (3) is composed of profiles placed in a triangle shape. The base (3) is integrated to the ground or deck in which it is installed and does not require anchors, and it further features a tracking mechanism which enables rotation of the upper structure's (4) azimuthal axis with respect to said base (3), as well as the previously explained rotation of the modules with respect to a horizontal axis.

The modules (12) are articulated on their lower part with the side profiles (5) and with the lower profile (8), while on their upper part, the modules are articulated with the upper profile (7), in both cases depending on rotating articulations with respect to axes in a transversal direction.

The tracker incorporates a mechanism for solar tracking through which there is a tracking of the sun's trajectory depending on an azimuthal axis and a transversal axis. The tracking with respect to the azimuthal axis is carried out by operation through a toothed belt (13), a belt or a chain, - operated by an electric motor that is not represented, - of a piston rod (14) connected to the lower profiles (8) in a noticeably central position of said lower profile (8).

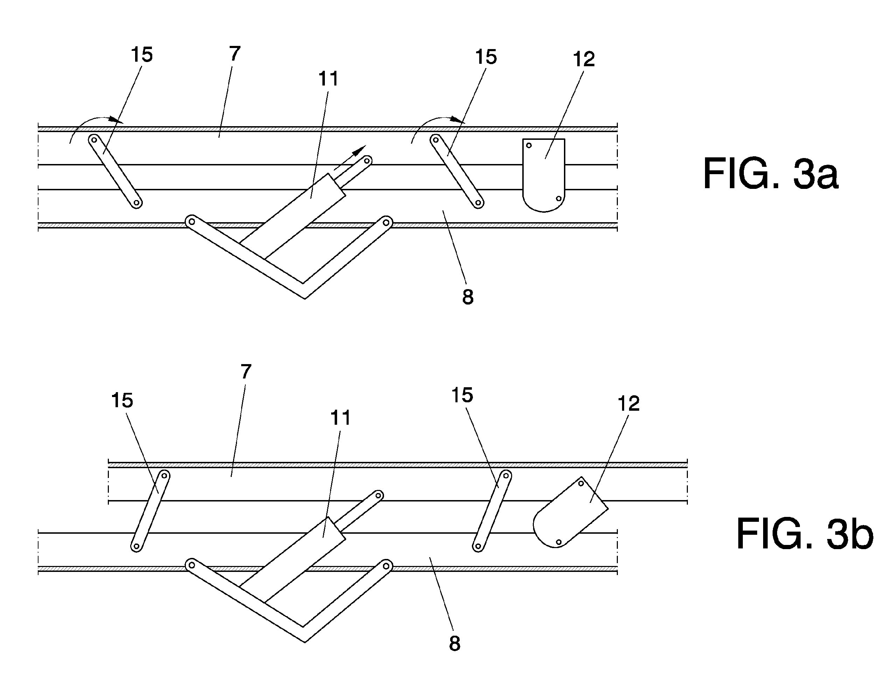

The rotation in a transversal direction is carried out through the relative movement of the upper central profile (7) and the lower central profile (8) as seen on Figure 3. In order to guarantee the structural rigidity necessary to obtain the adequate precision of a high-concentration photovoltaic solar tracking system, the upper (7) and lower (8) profiles are connected by several connecting rods (15), as shown in Figure 2, placed throughout the length of the upper (7) and lower (8) profiles. The number of connecting rods (15) and their characteristics depend on the modules' (12) geometry and weight, as well as design and construction standards provided by local legislation in the place of installation.

The actuator (11) is advantageously placed below the upper structure (4), and acts over the central area of the upper structure, as it may be seen in Figures 1 and 3.

## Claims

1. Solar tracker for rotating high-concentration photovoltaic solar modules (12) for decks and solar fields which comprises a control system and a frame, wherein the frame includes
- an upper structure (4) which supports modules (12) composed of photovoltaic solar cells;
- a base (3) composed of profiles assembled in a polygon shape, adapted for installation on ground or a deck; and
- a solar tracking mechanism which causes the rotation of the upper structure (4) with respect to the base (3) on an azimuthal axis, through the operation of a vertical piston rod (14) fixed to the frame, and on a horizontal axis, mechanism in which the upper structure (4) is mounted, **characterized in that** the upper structure (4) comprises:
- lateral profiles (5) in a Z shape, placed on a longitudinal direction, one on each side,
- an upper central profile (7) and a lower central profile (8) facing each other, connected to one another through connecting rods (15), placed longitudinally in parallel with the lateral profiles (5), and among said lateral profiles (5); and
- an actuator (11) placed over the central area of the central upper profile (7) which creates a relative movement between the upper central profile (7) and the lower central profile (8) and, with that movement, the rotation in a transversal direction of the modules (12), which are rotationally articulated on their lower part to the lateral profiles (5) and the lower profile (8) and on their upper part to the upper central profile (7).

2. Solar tracker for rotating high-concentration photovoltaic solar modules (12) for decks and solar fields according to claim 1, **characterized in that** the rotation of the vertical piston rod (14) is operated through a toothed belt (13), operated by an electric motor.

3. Solar tracker for rotating high-concentration photovoltaic solar modules (12) for decks and solar fields according to claim 1, **characterized in that** the rotation of the vertical piston rod (14) is operated through a belt, operated by an electric motor.

4. Solar tracker for rotating high-concentration photovoltaic solar modules (12) for decks and solar fields according to claim 1, **characterized in that** the rotation of the vertical piston rod (14) is operated through a chain, operated by an electric motor.

5. Solar tracker for rotating high-concentration photovoltaic solar modules (12) for decks and solar fields according to any of the previous claims, **characterized in that** the base (3) has a triangular shape.

6. Solar tracker for rotating high-concentration photovoltaic solar modules (12) for decks and solar fields according to any of the previous claims, **characterized in that** the upper structure (4) additionally comprises crossbeams (9) for rigidity placed on the lower part of the lateral profiles (5) and the central profiles (7, 8) and connected to said lateral profiles (5) and central profiles (7, 8) according to a transversal direction.
